# EUROPÄISCHE PATENTSCHRIFT

(11) **EP 0 829 124 B1**
(45) Veröffentlichungstag und Bekanntmachung des Hinweises auf die Patenterteilung: **17.08.2005**
(21) Anmeldenummer: 96946191.2
(22) Anmeldetag: 12.12.1996
(51) Int. Cl.: H02J 7/16

(54) **VORRICHTUNG ZUR ERZEUGUNG EINER GEREGELTEN SPANNUNG**
DEVICE FOR GENERATING A REGULATED VOLTAGE
DISPOSITIF POUR LA GENERATION D'UNE TENSION REGULEE

(30) Priorität: 26.03.1996 DE 19611908
(43) Veröffentlichungstag der Anmeldung: 18.03.1998
(60) Teilanmeldung: 05103944.4
(73) Patentinhaber: ROBERT BOSCH GMBH, 70442 Stuttgart (DE)
(72) Erfinder: KOHL, Walter, D-74321 Bietigheim-Bissingen (DE); MEYER, Friedhelm, D-75428 Illingen (DE); MITTAG, Rainer, D-70806 Kornwestheim (DE); SUELZLE, Helmut, D-71691 Freiberg (DE)
(86) Internationale Anmeldenummer: PCT/DE1996/002401
(87) Internationale Veröffentlichungsnummer: WO 1997/036360

(56) Entgegenhaltungen:
- EP-A- 0 055 149
- EP-A- 0 330 561
- EP-A- 0 408 436
- DE-A- 2 806 597
- US-A- 4 079 306

## Beschreibung

### Stand der Technik

Die Erfindung betrifft eine Vorrichtung zur Erzeugung einer geregelten Spannung nach der Gattung des Hauptanspruchs. Eine solche Vorrichtung wird beispielsweise in Kraftfahrzeugen eingesetzt, wobei dann der Generator vom Motor beziehungsweise der Brennkraftmaschine des Fahrzeuges angetrieben wird.

Zur Erzeugung einer geregelten Spannung, beispielsweise zur Energieversorgung in einem Kraftfahrzeug werden üblicherweise Generatoren eingesetzt, die vom Fahrzeugmotor über einen Keilriemen angetrieben werden. Diese Generatoren sind üblicherweise Drehstromgeneratoren mit einer Erregerwicklung, die vom Erregerstrom durchflossen wird, wobei ein Spannungsregler mit dem Generator in Verbindung steht und den Erregerstrom so regelt, daß die Ausgangsspannung des Generators im wesentlichen konstant ist und etwas höher ist als die Nennspannung einer vom Generator zu ladenden Batterie. Bei herkömmlichen Generatoren wird der Erregerstrom über die Erregerdioden ausgekoppelt und vom Generator selbst erzeugt. Die Zuführung des Erregerstroms erfolgt über eine Klemme D+, die sowohl am Generator als auch am Spannungsregler vorhanden ist.

Es sind jedoch auch Generator-Spannungsregler-Systeme bekannt, bei denen keine Erregerdioden benötigt werden, da die Erregerwicklung direkt an die Batterie angeschlossen wird. Ein solcher Generator ohne D+- Anschluß ist beispielsweise aus der europäischen Patentanmeldung EP-A2 0 401 758 bekannt. Die Regelung der Höhe der Ausgangsspannung des Generators erfolgt bei diesem bekannten Generator ebenfalls mit Hilfe eines Spannungsreglers, der über einen als Schaltelement wirkenden Transistor den Stromfluß durch die Erregerwicklung so beeinflußt, daß die Ausgangsspannung des Generators im wesentlichen konstant ist. Beim bekannten Generator-Spannungsregler-System werden keine gesonderten Maßnahmen getroffen, die eine schnelle Erregung des Generators gewährleisten. Aus der EP-A2 0 401 758 ist lediglich bekannt, bei kleinen Generatordrehzahlen, wenn die Ausgangsspannung des Generators nicht ausreicht, um die Batterie zu laden, eine zusätzliche Verbindung zwischen der Erregerwicklung und Masse herzustellen und dadurch den Erregerstrom zu erhöhen.

Aus der Druckschrift EP-Al-0 330 561 sind Vorrichtungen zur Erzeugung einer geregelten Spannung in einem Kraftfahrzeug bekannt, die einen Generator mit einer Erregerwicklung sowie ein Gleichrichtersystem umfassen. Der Generator steht mit einem Spannungsregler über verschiedene Anschlüsse in Verbindung. Am Anschluß B+ wird die gleichgerichtete, geregelte Ausgangsspannung des Generators entnommen, die zur Versorgung des Bordnetzes dient. Der Anschluß B+ des Generators steht weiterhin mit der Erregerwicklung in Verbindung und der Strom durch die Erregerwicklung wird mit Hilfe eines Schalttransistors geregelt. Diesem Schalttransistor werden Signale zugeführt, die im Spannungsregler durch Auswertung vorgebbarer Größen ermittelt werden. Die bekannten Vorrichtungen zur Erzeugung einer geregelten Spannung weisen jeweils Generatoren auf, die über mehr als zwei Verbindungen mit dem Bordnetz in Verbindung stehen, wobei eine Verbindung über die Ladekontrolllampe zur Batterie führt.

### Vorteile der Erfindung

Die erfindungsgemäße Vorrichtung mit den Merkmalen des Anspruchs 1 hat demgegenüber den Vorteil, daß Generatoren einschließlich der zugehörigen Spannungsregler, eingesetzt werden können, die lediglich über zwei Anschlüsse miteinander verbunden sind und keinen D+-, L- oder KL15-Anschluß aufweisen und daß dennoch sichergestellt wird, daß unmittelbar nach der Inbetriebnahme des Generators, also unmittelbar nach dem Start der Brennkraftmaschine, eine schnelle Erregung des Generators erfolgt. Erzielt wird dieser Vorteil, indem dem Spannungsregler Informationen zugeführt werden, die erkennen lassen, daß ein Start erfolgt. Es wird dann sofort eine Verbindung vom Plus-Anschluß des Generators über die Erregerwicklung nach Masse hergestellt, über die ein Vorerregungsstrom fließt, der ein schnelles Anlaufen der Erregung des Generators sicherstellt.

Weitere Vorteile der Erfindung werden durch die in den Unteransprüchen angegebenen Maßnahmen erzielt. Werden weitere zur Regelung benötigte Größen wie Batteriespannung oder Batterietemperatur im Regler simuliert, werden auch bei erweiterten Spannungsreglern keine zusätzlichen Klemmen benötigt. Eine solche Simulation kann vorteilhafterweise fahrzeugtypabhängig erfolgen. Sie eignet sich vorzugsweise in Verbindung mit einer sogenannten "Bandende-Programmierung" und erfolgt also nicht bei der Reglerherstellung, sondern erst am Ende der Gesamtsystemfertigung und wird dann gegebenenfalls für den Anwendungszweck abgeglichen.

Durch Auswertung des im Regler vorhanden DF-Signales, das das Tastverhältnis EIN/AUS des Spannungsreglers anzeigt, kann ein Maß für die Höhe des Erregerstromes gewonnen werden und damit die Generatorauslastung abgeschätzt werden. Diese Information steht in vorteilhafter Weise im Regler bereit und muß nicht über zusätzliche Eingangsklemmen zugeführt werden. Die Auswertung des DF-Signales erlaubt eine Erkennung einer Spannungsreserve und bietet zusätzlich die Möglichkeit, die Zuschaltung von weiteren Verbrauchern an das Vorhandensein einer Spannungsreserve zu knüpfen.

Falls durch Störungseinfluß eine irrtümliche Erregerstromeinschaltung bei stehendem Motor ausgelöst wird, kann dies durch Auswertung des Phasensignales erkannt werden und es kann in vorteilhafter Weise ein Zeitglied nach einer gewissen Zeitspanne von einigen Sekunden aktiviert werden, das seinerseits den Erregerstrom abschaltet. Damit kann eine ungewollte Batterieentladung vermieden werden.

Da gegenüber herkömmlichen Generatoren weniger Anschlüsse und damit auch weniger Verbindungsleitungen erforderlich sind und überhaupt keine Steuerleitungen vorhanden sind, ist eine Erhöhung der Störsicherheit gewährleistet und das System wird gegenüber elektromagnetischen Störungen unempfindlicher.

### Zeichnung

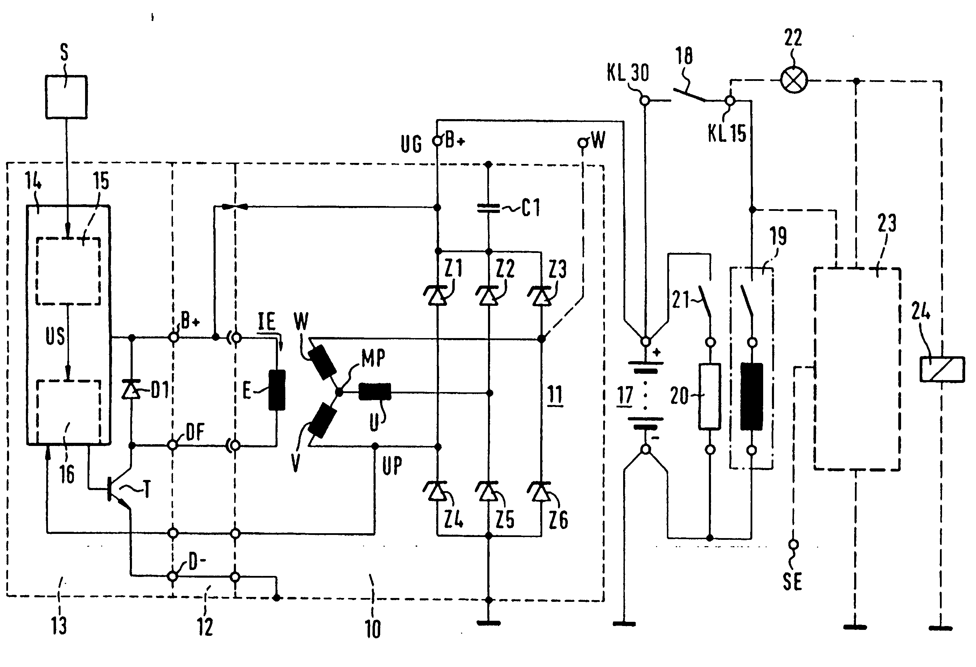

Ein Ausführungsbeispiel der Erfindung ist in der Zeichnung dargestellt und wird in der nachfolgenden Beschreibung näher erläutert.

### Beschreibung

In der Figur sind die wesentlichsten Bestandteile eines Spannungsversorgungssystems in einem Kraftfahrzeug dargestellt. Die einzelnen Bestandteile sind ein Drehstromgenerator 10, der von einer nicht dargestellten Brennkraftmaschine angetrieben wird und die Phasenwicklungen U, V, W umfaßt, die in einem gemeinsamen Punkt MP miteinander verbunden sind. Am Ausgang der Phasenwicklungen entsteht bei sich drehendem Generator die Phasenspannung UP. Die Phasenwicklungen sind mit der Gleichrichterbrücke 11 verbunden, die die Zenerdioden Z1 bis Z6 umfaßt. Die Gleichrichterbrücke 11 liegt einerseits auf Masse und führt andererseits zum Anschluß B+, an der die vom Generator abgegebene, gleichgerichtete Ausgangsspannung UG entsteht.

Die Erregerwicklung E des Generators 10 ist über den Bürstenhalter 12 mit den Anschlüssen B+ und DF des Spannungsreglers 13 verbunden. Zwischen dem Anschluß DF und dem Anschluß D- des Spannungsreglers 13, der über den Bürstenhalter auf Masse geführt ist, liegt der Schalttransistor T1, über den der Erregerstrom IE durch die Erregerwicklung E geregelt werden kann. Die Basis des Schalttransistors T ist mit einem Schaltungsblock 14 verbunden, in dem Sensorsignale ausgewertet werden, die erkennen lassen, ob sich der Generator dreht beziehungsweise ob ein Start der Brennkraftmaschine vorliegt. Der Auswerteblock, in dem diese Signale ausgewertet beziehungsweise bereitgestellt werden, ist mit 15 bezeichnet. Ein weiterer Schaltungsblock 16 dient zur Ausgabe der Sensorsignale, die mit US bezeichnet sind. Dem Schaltungsblock 16 wird auch noch die Phasenspannung UP zugeführt, die beispielsweise an der Phasenwicklung V abgegriffen wird und über entsprechende Anschlüsse am Bürstenhalter 12 beziehungsweise Spannungsregler 13 weitergeleitet werden. Der Schaltungsblock 14 übernimmt insgesamt die Ansteuerung des Transistors T. Der Anschluß B+ des Reglers 13 beziehungsweise der zugehörige Anschluß der Erregerwicklung E sind gemeinsam an die Generatorklemme B+ angeschlossen, wobei der Anschluß innerhalb des Generators 10 über den Bürstenhalter 12 erfolgen kann. Zwischen dem Anschluß B+ des Spannungsreglers und dem Anschluß DF liegt noch eine Diode D1. Die Schaltungsblöcke 14, 15, 16 können als Mikroprozessor ausgestaltet sein und Bestandteil des Steuerteils des Spannungsreglers 13 sein.

Als weiterer Bestandteil des Drehstromgenerators 10 liegt ein Kondensator C1 zwischen den Kathoden der Zenerdioden Z1, Z2, Z3 und Masse. Ein zusätzlicher Anschluß W kann vorhanden sein, er steht dann mit der Phasenwicklung W in Verbindung und liefert die Phasenspannung UP.

Vom Fahrzeugbordnetz ist die Batterie 17 dargestellt, deren Pluspol mit der Generatorklemme B+ in Verbindung steht und deren Minuspol auf Masse liegt. Der Pluspol der Batterie 17 ist weiterhin mit Klemme KL30 verbunden, diese führt über den Zündschalter 18 zur Klemme KL15 und damit zum Starter 19. Die Verbraucher sind mit 20 bezeichnet, sie können über Schaltmittel 21 mit dem Pluspol der Batterie 17 verbunden werden.

Als Ergänzung zum Bordnetz kann von Klemme KL15 eine Verbindung zur Ladekontrollampe 22 geführt sein, die über eine Lampen-/Relais-Steuerung 23 auf Masse geführt wird. Die Lampen-/Relais-Steuerung 23 steht ferner mit der Klemme KL15 in Verbindung und weist einen Steuereingang SE auf, über den Steuersignale zuführbar sind. Parallel zur Lampen-/Relais-Steuerung 23 liegt ein Relais 24.

Die in der Figur dargestellte Vorrichtung zur Erzeugung einer geregelten Ausgangsspannung für ein Fahrzeugbordnetz hat zwischen dem Generator 10 und dem Bordnetz nur zwei Verbindungen, nämlich den Anschluß B+, an dem die geregelte und gleichgerichtete Ausgangsspannung UG des Generators 10 zur Versorgung des Bordnetzes abgegriffen wird sowie der gemeinsame Masseanschluß D-. Der bei herkömmlichen Bordnetzen vorhandene Anschluß D+ entfällt. Die Spannungsversorgung für die Erregerwicklung E beziehungsweise die Spannung zur Erzeugung des Erregerstromes IE wird generatorintern über Klemme B+ abgegriffen. Die Verbindung zwischen der Erregerwicklung und Masse wird mit Hilfe des Transistors T hergestellt, sofern der Basis des Transistors T ein entsprechendes Ansteuersignal zugeführt wird. Bei stehendem Generator sperrt der Transistor T und es fließt kein Erregerstrom. Erfolgt ein Start der Brennkraftmaschine, beginnt der Generator sich zu drehen und es wird ein Erregerstrom benötigt. Dieser Strom für die Vorerregung wird direkt vom Anschluß B+ geliefert, sobald der Spannungsregler den Start der Brennkraftmaschine erkennt. Für die Starterkennung sind verschiedene Varianten möglich, die im folgenden beschrieben werden:

In einer ersten Variante werden die während des Startvorganges auftretenden Beschleunigungen mit Hilfe eines Beschleunigungssensors S registriert. Dieser Beschleunigungssensor wird an einer Stelle der Brennkraftmaschine angebracht, bei der besonders hohe Beschleunigungswerte auftreten. Das Ausgangssignal des Beschleunigungssensors wird dem Block 15 des Spannungsreglers zugeführt. Es ist beispielsweise eine Spannung oder wird zu einer Spannung aufbereitet, die als Sensorspannung US bezeichnet ist und auf die Basis des Transistors T des Spannungsreglers geführt wird und diesen einschaltet. Der Beschleunigungssensor kann auch im Spannungsregler integriert sein

In einer zweiten Variante wird die Amplitude der über den Restmagnetismus induzierten Phasenspannung UP ausgewertet. Diese Phasenspannung wird beispielsweise an der Phase V abgegriffen und der Schaltung 14 zugeführt. Erreicht die Amplitude der Phasenspannung einen Grenzwert, wird der Transistor T des Spannungsreglers 13 angesteuert und der Erregerstrom eingeschaltet. Da die Phasenspannung bzw. das Phasensignal im Regler bereits vorhanden ist, werden keine zusätzlichen Leitungen/Anschlüsse benötigt.

In einer dritten Variante wird die Frequenz der Phasenspannung ausgewertet. Die Frequenz der über den Restmagnetismus induzierten Phasenspannung ist von der Drehzahl des Generators abhängig. Durch Auswertung dieser Frequenz kann somit die Drehzahl ermittelt werden und mit einem vorgebbaren Schwellwert verglichen werden. Überschreitet die Frequenz der Phasenspannung diesen Grenzwert, wird in der Schaltung 14 eine Spannung erzeugt, die Basis des Transistors T zugeführt wird und diesen in leitenden Zustand versetzt.

In einer vierten Variante wird der Spannungsverlauf an der Klemme B+ ausgewertet. Der Verlauf dieser Spannung während des Startvorgangs weist einige charakteristische Maxima und Minima auf. wird der erwartete Spannungsverlauf erkannt, muß ein Startvorgang erfolgt sein. Die Erkennung des zu erwartenden Spannungsverlaufs wird ebenfalls in der Schaltungsanordnung 14 durchgeführt. Ist ein Start erkannt, erfolgt wiederum eine Ansteuerung des Transistors T und der Erregerstrom IE wird eingeschaltet.

Die bisher beschriebenen verschiedenen Varianten zur Starterkennung dienen alle dazu, daß unmittelbar nach dem Start der Brennkraftmaschine ein ausreichender Erregerstrom IE durch den Erreger E fließt. Nachdem der Generator 10 den vollen Erregungszustand erreicht hat, muß eine Begrenzung des Erregerstromes erfolgen, damit die Ausgangsspannung UG des Generators den gewünschten Wert nicht überschreitet. Der Spannungsregler geht dann vom Vorerregungs-Betriebszustand in den normalen Regelbetrieb über. Die Umschaltung von der Vorerregung auf den normalen Regelbetrieb erfolgt beispielsweise über die Auswertung des Phasensignales. Wie bereits in der Beschreibung der Variante 2 oder 3 ausgeführt wird, ist sowohl die Amplitude der Phasenspannung als auch die Frequenz der Phasenspannung von der Drehzahl des Generators abhängig. Die Auswertung des Phasensignals ermöglicht daher eine Drehzahlbestimmung. Erreicht die aus dem Phasensignal ermittelte Drehzahl einen weiteren Schwellwert, der höher liegt als der für die Einschaltung des Erregerstromes verwendete Schwellwert, wird dies vom Regler 13 registriert und der Regler 13 geht in den normalen Regelzustand über, bei dem der Transistor T den Erregerstrom IE so regelt, daß eine konstante Ausgangsspannung UG an der Generatorklemme B+ entsteht. Beim Abschalten der Brennkraftmaschine wird der Antrieb des Generators beendet und die Generatordrehzahl fällt ab. Es erfolgt dann ein Übergang in den Ruhezustand mit minimaler Erregerstromaufnahme. Dazu wird eines der beiden Kriterien Phasenspannung UP <1V, entsprechend einer Drehzahl gegen Null oder Beschleunigungssensor inaktiv ausgewertet. Ist die Phasenspannung UP <1V oder der Beschleunigungssensor inaktiv, wird auf Motorstillstand erkannt und der Erregerstrom abgeschaltet, indem der Transistor T in seinen sperrenden Zustand geschaltet wird.

Damit das Phasensignal insbesondere während der Startphase verstärkt wird, kann der Läufer des Generators zusätzlich mit Magneten versehen werden, wie sie beispielsweise zur Streuflußkompensation bereits üblich sind.

Wird der Generatorstrom infolge von Störungen oder sonstigen Fehlern irrtümlich bei stehendem Motor eingeschaltet, kann durch ein Zeitglied, das z.B. in den Spannungsregler integriert ist, nach einigen Sekunden der Erregerstrom wieder abgeschaltet werden. Die Erkennung des stehenden Motors ist möglich, da das Phasensignal ausbleibt beziehungsweise keine Phasenspannung erzeugt wird. Das ausbleibende Phasensignal wird in der Schaltungsanordnung 14 registriert. Es wird dann das Zeitglied eingeschaltet, das nach einer gewissen Zeit den Transistor T in sperrenden Zustand schaltet. Damit wird vermieden, daß der Erregerstrom die Batterie entlädt.

Wird in einer erweiterten Reglerversion die Generatorausgangsspannung UG in Abhängigkeit von der Batteriespannung oder der Batterietemperatur geregelt, muß die entsprechende Information über Batteriespannung und/oder Batterietemperatur vorhanden sein, bei herkömmlichen Spannungsreglern wird diese Information über zusätzliche Klemmen zugeführt. Auf diese zusätzlichen Klemmen kann jedoch verzichtet werden, wenn die Batteriespannung und/oder Batterietemperatur im Regler aus ohnehin vorhandenen Daten berechnet beziehungsweise simuliert wird. Diese Simulation kann in einer Auswerteeinrichtung des Reglers 13 durchgeführt werden, die beispielsweise als Mikroprozessor ausgestaltet ist. Sie kann unter Berücksichtigung der im Spannungsregler ohnehin vorhandenen Sensorinformationen erfolgen. Die Simulation kann im übrigen fahrzeugtypabhängig erfolgen und beispielsweise als Bandende-Programmierung durchgeführt werden. Dabei wird der Regler nicht während der Fertigung, sondern erst nach Zusammenbau mit dem Generator oder erst nach Einbau ins Fahrzeug programmiert oder abgeglichen werden.

Durch Auswertung des an der Klemme DF anstehenden DF-Signales, das das Tastverhältnis EIN/AUS des Reglers anzeigt, kann ein Maß für die Höhe des Erregerstromes IE gewonnen werden. Damit kann die Generatorauslastung erkannt werden, wobei zu berücksichtigen ist, daß zwischen der Höhe des Erregerstromes und des Generatorstromes kein linearer Zusammenhang besteht.

Der Anschluß DF zwischen dem Spannungsregler 13 und dem Bürstenhalter 12 muß nicht als eigener Anschluß nach außen geführt werden, da im Bordnetz Verbraucher vorhanden sind, die nur bei Leistungsreserve im Bordnetz zugeschaltet werden sollen, kann eine Auswertung der Versorgungsspannung UG durchgeführt werden zur Erkennung, ob noch eine Energiereserve vorhanden ist oder nicht. Eine hohe Versorgungsspannung deutet darauf hin, daß diese Reserve noch vorhanden ist und die Verbraucher zugeschaltet werden können, eine niedrige Versorgungsspannung bedeutet, daß keine Reserve mehr vorhanden ist und die Verbraucher abgeschaltet werden sollten. Da das beschriebene Spannungsversorgungssystem keinerlei Steuerleitungen benötigt, sind weniger Anschlüsse vorhanden, die mit einer Schutzbeschaltung versehen werden müssen. Insgesamt wird der Regler unempfindlich gegen elektromagnetische Einstreuungen. Die EMV ist also gegenüber herkömmlichen Systemen verbessert.

Die beschriebene Vorrichtung zur Erzeugung einer geregelten Spannung ermöglicht Verfahren zur Spannungsregelung, die den Erfordernissen in einem Fahrzeugbordnetz optimal angepaßt werden können.

## Patentansprüche

1. Vorrichtung zur Erzeugung einer geregelten Spannung, mit einem Generator, der eine Erregerwicklung und ein Gleichrichtersystem umfaßt und über einen ersten Anschluß, an dem die gleichgerichtete, geregelte Generatorspannung (UG) entsteht (B+) und einen zweiten Anschluß, der der gemeinsame Masseanschluß ist (D-) mit einem Spannungsregler (13) in Verbindung steht und die Generatorspannung (UG) zur Versorgung eines Bordnetzes dient und der erste Anschluß (B+) des Generators (10) mit der Erregerwicklung (E) in Verbindung steht und der Stromfluß (IE) durch die Erregerwicklung (E) mittels eines Schaltmittels (T) beeinflußbar ist, wobei dem Schaltmittel (T) ein Signal (US) zuführbar ist, das von der Drehzahl des Generators abhängt, wobei der Start der Brennkraftmaschine und damit der Beginn der Drehung des Generators (10) durch Auswertung des Signals (US) erkannt wird, und der Stromfluß durch die Erregerwicklung (E) durch Einschalten des Schaltmittels (T) ausgelöst wird **dadurch gekennzeichnet, dass** das Signal (US) in einer Schaltungsanordnung (14), die Bestandteil des Spannungsreglers (13) ist, erzeugt wird, in Abhängigkeit vom Ausgangssignal eines Beschleunigungssensors (S), der die beim Start der Brennkraftmaschine auftretenden Beschleunigungen registriert und dass bei erkanntem Start die Verbindung der Erregerwicklung (E) mit dem ersten Anschluß (B+) durch entsprechende Ansteuerung des Schaltmittels (T) hergestellt wird.

2. Vorrichtung nach Anspruch 1, **dadurch gekennzeichnet, daß** das Schaltmittel (T) ein Transistor ist, insbesondere der im Spannungsregler (13) vorhandene Regeltransistor.

3. Vorrichtung nach einem der vorhergehenden Ansprüche, **dadurch gekennzeichnet, daß** im Spannungsregler Mittel vorhanden sind, insbesondere ein Mikroprozessor, der für die Regelung benötigte Größe wie Batteriespannung oder Batterietemperatur simuliert, wobei die Simulation in Abhängigkeit von im Regler gemessenen Größen erfolgt und/oder in Abhängigkeit vom Fahrzeugtyp erfolgt.

4. Vorrichtung nach einem der vorhergehenden Ansprüche, **dadurch gekennzeichnet, daß** die Belastung des Generators durch Auswertung des Tastverhältnisses (EIN/AUS) des Spannungsreglers ermittelt wird.

## Claims

1. Apparatus for generating a regulated voltage, having a generator, which comprises a field winding and a rectifier system and is connected to a voltage regulator (13) via a first terminal at which the rectified, controlled generator voltage (UG) is produced (B+) and a second terminal which is the common earth terminal (D-), the generator voltage (UG) serving the purpose of supplying power to a vehicle power supply system, and the first terminal (B+) of the generator (10) being connected to the field winding (E), and it being possible for the flow of current (IE) to be influenced by the field winding (E) by means of a switching means (T), it being possible for a signal (US), which depends on the rotational speed of the generator, to be fed to the switching means (T), the starting of the internal combustion engine and thus the point at which rotation of the generator (10) begins being identified by evaluating the signal (US), and the flow of current through the field winding (E) being triggered by the switching means (T), being closed, **characterized in that** the signal (US) in a circuit arrangement (14), which is part of the voltage regulator (13), is generated as a function of the output signal of an acceleration sensor (S) which registers the accelerations occurring when the internal combustion engine is started, and **in that**, when starting has been identified, the connection between the field winding (E) and the first terminal (B+) is produced by correspondingly driving the switching means (T).

2. Apparatus according to Claim 1, **characterized in that** the switching means (T) is a transistor, in particular the regulating transistor provided in the voltage regulator (13).

3. Apparatus according to one of the preceding claims, **characterized in that** means, in particular a microprocessor, are provided in the voltage regulator and simulate variables required for the regulation, such as battery voltage or battery temperature, the simulation being carried out as a function of variables measured in the regulator and/or as a function of the type of vehicle.

4. Apparatus according to one of the preceding claims, **characterized in that** the load on the generator is determined by evaluating the duty ratio (ON/OFF) of the voltage regulator.

## Revendications

1. Dispositif pour générer une tension régulée comprenant un générateur ayant un enroulement d'excitation et un système de redresseur, et relié à un régulateur de tension (13) par une première borne (B+) donnant la tension redressée et régulée du générateur (UG) et une seconde borne (D-) qui est la masse commune, la tension (UG) du générateur alimentant un réseàu embarqué, dans lequel la première borne (B+) du générateur (10) est reliée à l'enroulement d'excitation (E), et
un moyen de commutation (T) influence le passage du courant (IE) à travers l'enroulement d'excitation (E), le moyen de commutation (T) recevant un signal (US) dépendant de la vitesse de rotation du générateur, le démarrage du moteur thermique et ainsi le début de la rotation du générateur étant détectés par l'exploitation du signal (US) alors que le passage du courant à travers l'enroulement d'excitation (E) est déclenché par le déblocage du moyen de commutation (T),
**caractérisé en ce que**
le signal (US) est généré par un circuit (14) faisant partie du régulateur de tension (13) en fonction du signal de sortie d'un capteur d'accélération (S) enregistrant les accélérations au démarrage du moteur thermique, et
lorsque le démarrage est détecté, la commande correspondante du moyen de commutation (T) relie l'enroulement d'excitation (E) et la première borne (B+).

2. Dispositif selon la revendication 1,
**caractérisé en ce que**
le moyen de commutation (T) est un transistor notamment le transistor de régulation équipant le régulateur de tension (13).

3. Dispositif selon l'une des revendications précédentes,
**caractérisé en ce que**
le régulateur de tension comprend des moyens notamment un microprocesseur simulant la grandeur nécessaire à la régulation telle que la tension de la batterie ou sa température, et
la simulation se fait en fonction des grandeurs mesurées dans le régulateur et/ou en fonction du type de véhicule.

4. Dispositif selon l'une des revendications précédentes,
**caractérisé en ce qu'**
on détermine la charge dù générateur en exploitant le rapport de travail (marche/arrêt) du régulateur de tension.
